# EUROPÄISCHE PATENTSCHRIFT

(11) **EP 1 340 933 B1**
(45) Veröffentlichungstag und Bekanntmachung des Hinweises auf die Patenterteilung: **02.08.2006**
(21) Anmeldenummer: 03001765.1
(22) Anmeldetag: 28.01.2003
(51) Int. Cl.: F16K 39/02, F16K 11/16

(54) **Hochdruckventil**
High pressure valve
Soupape haute pression

(30) Priorität: 07.02.2002 DE 10204988
(43) Veröffentlichungstag der Anmeldung: 03.09.2003
(73) Patentinhaber: Pierburg GmbH, 41460 Neuss (DE)
(72) Erfinder: Lappan, Rolf, 50733 Köln (DE); Nowak, Martin, 51399 Burscheid (DE); Benra, Michael, 58456 Witten (DE); Hunkel, Dirk, 52062 Aachen (DE)
(74) Vertreter: von Kirschbaum, Alexander

(56) Entgegenhaltungen:
- DE-B- 1 014 810
- DE-B- 1 082 785
- DE-B- 1 095 609
- GB-A- 1 471 324
- US-A- 3 128 792
- US-A- 4 509 548

## Beschreibung

Die Erfindung betrifft ein Hochdruckventil, das insbesondere zum Einsatz in Kraftfahrzeugen in Verbindung mit Brennstoff- und Abgasleitungen geeignet ist. Insbesondere ist das Hochdruckventil für Zuführleitungen zu Brennstoffzellen geeignet, in denen beispielsweise Wasserstoff transportiert wird. Die Erfindung betrifft sowohl ein 3/2-Wegeventil, wie beispielsweise ein Bypassventil, als auch ein 2/2-Wegeventil, wie beispielsweise ein Abschaltventil.

Bekannte 2/2- oder 3/2-Wegeventile weisen einen Einlasskanal und einen bzw. zwei Auslasskanäle auf. Bei einem 2/2-Wegeventil ist der Einlasskanal mit dem einen Auslasskanal verbunden. Durch ein Stellglied, bei dem es sich beispielsweise um einen verschiebbaren Kolben handelt, kann der Auslasskanal geöffnet oder geschlossen werden. Ebenso kann ein 2/2-Wegeventil auch als Regelventil ausgebildet sein, bei dem durch die Stellung des Stellglieds die Größe einer Durchlassöffnung und somit die Größe des durch das Ventil strömenden Massenstroms geregelt werden kann. Bei einem herkömmlichen 3/2-Wegeventil sind zwei Auslasskanäle vorgesehen, wobei durch ein Stellglied üblicherweise einer der beiden Auslasskanäle verschlossen ist. Beide Ventiltypen weisen ferner ein Antriebselement auf, das mit dem Stellglied verbunden ist. Das Antriebselement, bei dem es sich beispielsweise um eine elektrische Antriebseinheit, wie einen Schrittmotor, handelt, dient zum Betätigen des Stellglieds.

Insbesondere in der Kraftfahrzeugtechnik besteht die Anforderung, dass Ventile mit geringen Betätigungskräften schaltbar sind, da somit kleine und leichte Antriebselemente verwendet werden können. Des weiteren bestehen hohe Dichtheitsanforderungen. Beispielsweise sind zur genauen Regelung und Steuerung von Prozessen durch Ventile hervorgerufene Leckagen nachteilig. Hohe Dichtheitsanforderungen bestehen insbesondere beim Einsatz derartiger Ventile im Zusammenhang mit Brennstoffzellen. Bei Brennstoffzellen, die üblicherweise mit einem Gemisch aus Wasserstoff und Sauerstoff bzw. Luft betrieben werden, muss sichergestellt sein, dass beispielsweise kein ungewolltes Mischen von Sauerstoff und Wasserstoff erfolgt, da bereits ab einem Wasserstoffanteil von ca. 3% ein explosives Wasserstoff-Sauerstoff-Gemisch vorliegt. Bei bekannten Ventilen kann eine hohe Dichtigkeit dadurch erreicht werden, dass beispielsweise ein als Kolben ausgebildetes Stellglied mit hoher Kraft gegen eine Dichtung gedrückt wird.

In US 3,128,792 ist ein 3/2-Wegeventil mit einem innerhalb eines Stellgliedes angeordneten Steuerelement beschrieben. Durch das Stellglied wird jeweils ein Auslasskanal geöffnet bzw. geschlossen. Das Stellglied weist zwei Verbindungskanäle auf, die einen Einlasskanal des 3/2-Wegeventils über das Stellglied mit jeweils einem der Auslasskanäle verbinden. Die Verbindungskanäle werden mit Hilfe des Steuerelementes geöffnet bzw. geschlossen. Das Steuerelement ist zur Befestigung mit einer Stange verbunden, die über innerhalb der Verbindungskanäle angeordnete Buchsen geführt ist und durch einen der Auslasskanäle verläuft. Dieser Auslasskanal ist abgewinkelt, damit die Stange durch eine Seitenwand des Auslasskanals zur Verbindung mit einem Antriebselement hindurchgeführt werden kann.

Aufgabe der Erfindung ist es, ein Hochdruckventil zu schaffen, das mit geringen Betätigungskräften schaltbar ist und gleichzeitig hohe Dichtheitsanforderungen erfüllt.

Die Lösung der Aufgabe erfolgt erfindungsgemäß durch die Merkmale des Anspruchs 1.

Ein Stellglied des Hochdruckventils, das zum Öffnen und Schließen des Auslasskanals dient, ist mit einem Verbindungskanal versehen. Durch den Verbindungskanal in dem Stellglied ist die Überdruckseite mit der Unterdruckseite des Ventils verbindbar, wobei bei geschlossenem Auslasskanal im Einlasskanal Überdruck und im Auslasskanal Unterdruck herrscht. Der vorgesehene Verbindungskanal, der zur Verringerung der Druckdifferenz zwischen dem Einlass- und dem Auslasskanal dient, ist öffen- und schließbar. Hierbei ist bei geschlossenem Auslasskanal auch der Verbindungskanal geschlossen. Zum Öffnen des Auslasskanals wird zuerst der in dem Stellglied vorgesehene Verbindungskanal geöffnet, so dass Medium durch den Verbindungskanal vom Einlasskanal in den Auslasskanal strömen kann. Dies führt zu einer Verringerung der Druckdifferenz zwischen Einlass- und Auslasskanal. Anschließend kann das Stellglied aufgrund der verringerten Druckdifferenz leichter betätigt werden, da die Kraft zum Betätigen des Stellglieds bei einer geringen Druckdifferenz, die vorzugsweise annähernd null ist, erheblich geringer ist als bei großen Druckdifferenzen. Zum Öffnen und Schließen des Verbindungskanals ist in dem Verbindungskanal ein verschiebbares Steuerelement angeordnet. Durch das Vorsehen eines Verbindungskanals in dem Stellglied ist somit ein Hochdruckventil geschaffen, dessen Stellglied mit geringen Betätigungskräften betätigt werden kann. Dies hat den Vorteil, dass ein gegenüber herkömmlichen Ventilen kleineres Antriebselement vorgesehen werden kann. Das Steuerelement ist erfindungsgemäß mit einem Antriebselement über einen Exzenter und eine Welle zum Verschieben des Steuerelements verbunden.

Bei dem Steuerelement handelt es sich vorzugsweise um einen Steuerkolben. Durch Verschieben des Steuerelements kann eine Öffnung des Verbindungskanals, durch die der Verbindungskanal mit dem

Auslasskanal verbunden ist, geöffnet und geschlossen werden. Hierbei weist ein beispielsweise als Steuerkolben ausgebildetes Steuerelement eine vorzugsweise mit einer Dichtung versehene Dichtfläche auf. Um nach dem Öffnen der Kanalöffnung eine Verbindung zwischen dem Einlass- und Auslasskanal zu realisieren, weist der Steuerkolben beispielsweise eine außerhalb der Dichtfläche angeordnete Durchgangsbohrung auf. Ebenso kann der Steuerkolben eine Abflachung oder dgl. aufweisen, so dass der Steuerkolben nicht mit seinem gesamten Umfang an einer Innenseite des Verbindungskanals anliegt.

Vorzugsweise ist das erfindungsgemäße Hochdruckventil derart ausgebildet, dass das selbe Antriebselement sowohl zum Betätigen des Steuerelements als auch des Stellglieds dient. Vorzugsweise ist hierbei das Antriebselement mit dem Steuerelement und das Steuerelement mit dem Stellglied verbunden. Mit Hilfe des Antriebselements erfolgt somit zuerst ein Verschieben des Steuerelements und damit ein Öffnen der Kanalöffnung des Verbindungskanals und beim weiteren Verschieben des Steuerelements eine Mitnahme des Stellgliedes, so dass der Auslasskanal geöffnet wird. Hierzu ist vorzugsweise ein Mitnahmeelement vorgesehen, durch das das Steuerelement mit dem Stellglied verbunden ist. Bei dem Mitnahmeelement kann es sich um eine oder mehrere Zapfen handeln, die in einer oder mehrerer Nuten geführt sind. Sobald nach dem Verschieben des Steuerelements der Zapfen an ein Ende der Nut gelangt, wird hierdurch das Stellglied automatisch mit verschoben.

Bei einem 3/2-Wegeventil weist das erfindungsgemäße Hochdruckventil zwei Auslasskanäle auf. Vorzugsweise werden die beiden Auslasskanäle gemäß der Erfindung durch ein einziges Stellglied geöffnet oder verschlossen. Hierzu wird das mit dem Antriebselement verbundene Stellglied beispielsweise hin- und herbewegt, so dass stets einer der beiden Auslasskanäle geöffnet und der andere geschlossen ist. Ebenso ist es möglich, das Stellglied in einer Mittelstellung anzuordnen, so dass beide Auslasskanäle geöffnet sind. Hierdurch ist auch eine Regelung der Massenströme, die den beiden Auslasskanälen zugeführt werden, möglich.

Erfindungsgemäß weist der Verbindungskanal insbesondere bei einem 3/2-Wegeventil vorzugsweise zwei Kanalöffnungen auf, die jeweils durch Verschieben des Steuerelements öffen- und schließbar sind.

Nachfolgend wird die Erfindung anhand einer bevorzugten Ausführungsform eines erfindungsgemäßen 3/2-Wegeventils näher erläutert.

Es zeigen:

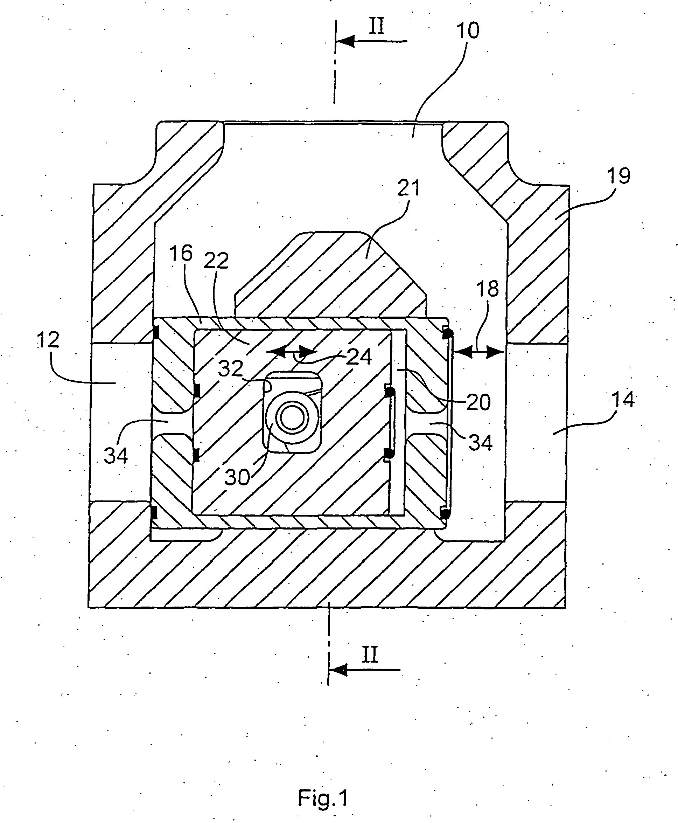

- Fig. 1: eine schematische Schnittansicht,
- Fig. 2: eine schematische Schnittansicht entlang der Linie II-II in Fig. 1 und
- Fign. 3-6: unterschiedliche Schaltzustände des in Fig. 1 dargestellten 3/2-Wegeventils.

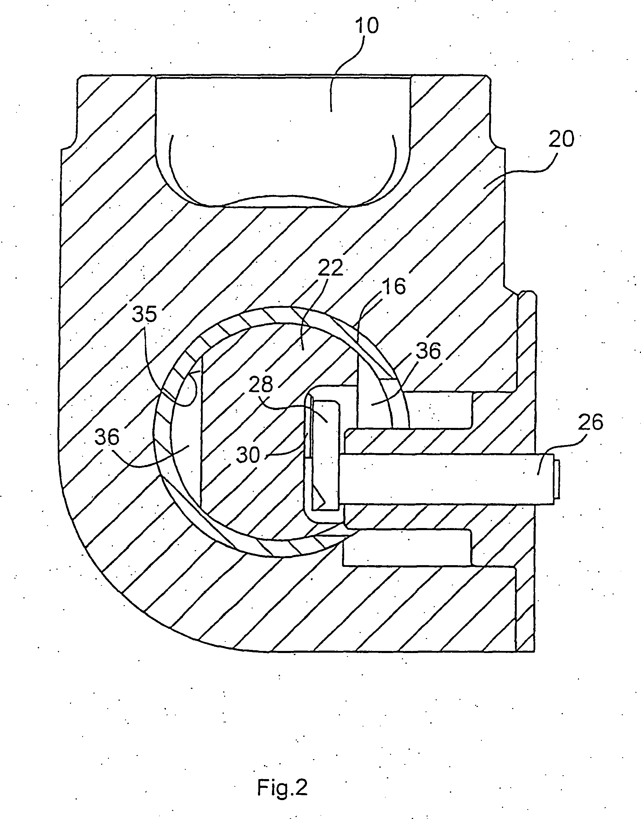

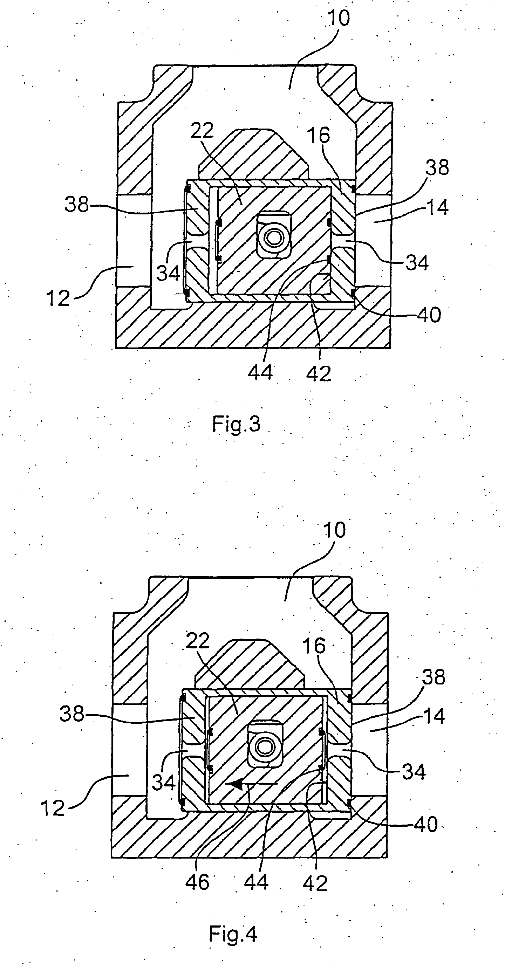

Das Hochdruckventil weist einen Einlasskanal 10 und zwei Auslasskanäle 12,14 auf. Je nach Stellung eines Stellgliedes 16 ist der Einlasskanal 10 mit einem der beiden Auslasskanäle 12 oder 14 verbunden. Bei einer Mittelstellung des Stellglieds 16 ist der Einlasskanal 10 mit beiden Auslasskanälen 12,14 verbunden. Bei dem Stellglied 16 handelt es sich im dargestellten Ausführungsbeispiel um einen zylindrischen Kolben, der in Richtung eines Pfeils 18 hin- und herbewegt werden kann. Zur Führung des Stellglieds 16 weist ein Gehäuse 19 des Hochdruckventils einen Anlagesteg 21 auf. Das Stellglied bzw. der Stellkolben 16 weist eine im dargestellten Ausführungsbeispiel zylindrische Ausnehmung 20 auf, in der ein Steuerelement 22, das im dargestellten Ausführungsbeispiel als Steuerkolben ausgebildet ist, angeordnet ist. Der Steuerkolben 22 kann innerhalb der Ausnehmung 20 in Richtung eines Pfeils 24 hin- und herbewegt werden. Die beiden Kolben 16,22 sind koaxial zueinander angeordnet. Zum Verschieben des Stellkolbens 16 ist eine nicht dargestellte Antriebseinheit, wie ein elektrischer Schrittmotor, vorgesehen. Dieser ist über eine Welle 26 (Fig. 2) mit einem Exzenter 28 mit dem Steuerkolben 22 verbunden. Durch Drehen der Welle 26 erfolgt ein Verschieben des Steuerkolbens 22 und zusammen mit diesem ein Verschieben des Stellkolbens 16 (siehe Fign. 3-6). Der Exzenter 28 ist mit einem Zapfen 30 verbunden, der in einer Ausnehmung 32 des Steuerkolbens 22 ragt.

Um auch bei hohen Druckunterschieden zwischen dem Einlasskanal 10 und dem geschlossenen Auslasskanal 12 ein Verschieben des Stellglieds 16 mit geringen Betätigungskräften zu ermöglichen, weist das Stellglied erfindungsgemäß einen Verbindungskanal auf. Der Verbindungskanal besteht aus zwei in dem Stellglied 16 vorgesehenen Bohrungen 34, die mit der innerhalb des Stellglieds vorgesehenen Ausnehmung verbunden sind, so dass ein Verbindungskanal 36 ausgebildet ist, wobei der Kolben 22 abgeflacht ist und somit nicht vollständig an einer Innenseite 35 des Stellkolbens 16 anliegt. Das Steuerelement 22 ist somit innerhalb des Verbindungskanals angeordnet.

Die Bewegung des Stellgliedes 16 wird im folgenden anhand der Fign. 3-6 näher erläutert:

Der Auslasskanal 14 ist in Fig. 3 durch das Stellglied 16 verschlossen. Hierzu weist das Stellglied an einer Dichtseite 38 eine mit einer Ringdichtung 40 versehene Dichtfläche auf. Das Abdichten zwischen dem Einlasskanal 10 und dem Auslasskanal 14 erfolgt über die Ringdichtung 40, die von dem Stellglied 16 zusammengepresst wird. Da die Bohrungen 34 zusammen mit dem Verbindungskanal 36 eine Verbindung zwischen dem Einlasskanal 10 und dem Auslasskanal 14 durch das Stellglied 16 hindurch ermöglichen würden, muss die in Richtung des Auslasskanals 14 weisende Bohrung 34 ebenfalls abgedichtet werden. Hierzu wird der Steuerkolben 22 gegen eine Anschlagfläche 42 gedrückt, wobei eine Ringdichtung 44, die die Bohrung 34 umgibt, zusammengedrückt wird. Hierdurch ist der Verbindungskanal 34,36 geschlossen.

Zum Öffnen des Auslasskanals 14 wird mit Hilfe des Antriebselements die Welle 26 zusammen mit dem Exzenter 28 gedreht, so dass das Steuerelement 22 in Richtung eines Pfeils 46 (Fig. 4) verschoben wird. Hierbei wird die in Richtung des Auslasskanals 14 weisende Bohrung 34, die als eine der beiden Kanalöffnungen 34 des Verbindungskanals dient, geöffnet. Es erfolgt somit ein Druckausgleich zwischen dem Einlasskanal 10 und dem Auslasskanal 14, da Medium durch die Bohrungen 34 und den Verbindungskanal 36 in den Auslasskanal strömt. Die Druckdifferenz zwischen dem Einlasskanal 10 und dem Auslasskanal 14 wird somit erheblich verringert.

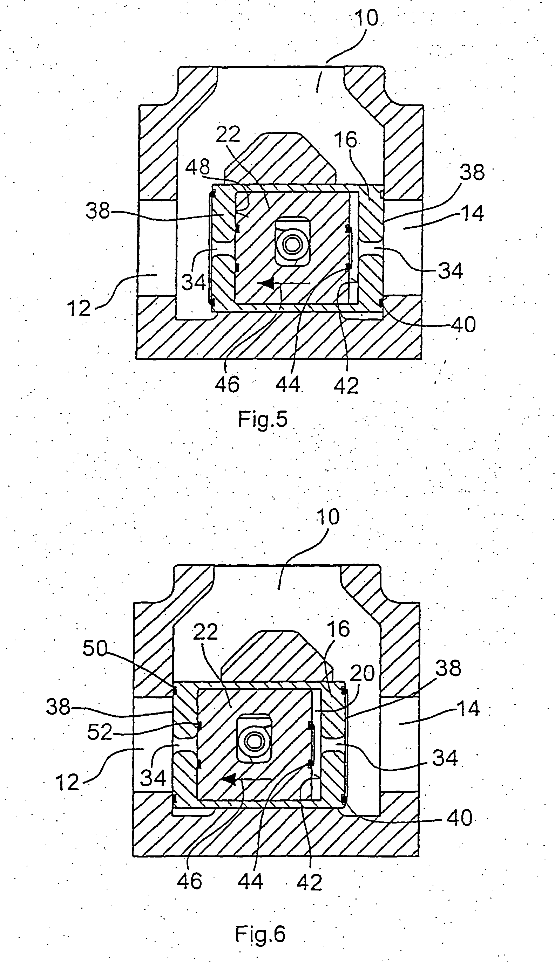

Ein weiteres Verschieben des Steuerkolbens 22 in Richtung des Pfeils 46 führt dazu, dass der Steuerkolben 22 an eine in Fig. 5 linke Anschlagfläche 42 des Stellgliedes 16 stößt.

Bei einer weiteren Bewegung des Steuerkolbens 22 in Richtung des Pfeils 46 dient die Anschlagfläche 48 im dargestellten Ausführungsbeispiel als Mitnahmeelement, da bei der in Fig. 5 dargestellten Stellung eine weitere Bewegung des Steuerkolbens 22 dazu führt, dass der Stellkolben 16 ebenfalls in Richtung des Pfeils 46 bewegt wird. Diese Bewegung erfolgt bis in die in Fig. 6 dargestellte Stellung, in der der Auslasskanal 12 verschlossen ist. Hierbei wird ein in der zweiten Dichtseite 38, die in Richtung des Auslasskanal 12 weist, vorgesehener Dichtring 50 zusammengedrückt und bewirkt ein Abdichten zwischen dem Einlasskanal 10 und dem Auslasskanal 12. Die in Richtung des Auslasskanals 12 weisende Kanalöffnung 34 wird durch einen von dem Steuerkolben 22 zusammengedrückten Dichtring 52 dicht verschlossen. Hierbei ist zu berücksichtigen, dass durch die in Fig. 6 rechte Bohrung 34 Medium in die Ausnehmung 20 des Stellglieds 16 gelangt und somit Druck an dem Steuerkolben 22 anliegt, der den Kolben 22 in Fig. 6 nach links drückt. Hierdurch ist das Abdichten zwischen dem Einlasskanal 10 und dem Auslasskanal 12 mit Hilfe der beiden Dichtringe 48,50 unterstützt, so dass hohe Dichtheitsanforderungen erfüllt werden können.

Zum Öffnen des Auslasskanals 12 und anschließendem Verschließen des Auslasskanals 14 erfolgt ein Verschieben des Steuerkolbens 22 und des Stellkolbens 16 in umgekehrter Reihenfolge, d.h. aus der in Fig. 6 dargestellten Stellung über die in den Fign. 5 und 4 dargestellten Stellungen in die in Fig. 3 dargestellte Stellung.

Das vorstehend anhand eines 3/2-Wegeventils beschriebene Prinzip ist ebenso für ein 2/2-Wegeventil einsetzbar. Bereits durch ein Verschließen eines der beiden Auslasskanäle 12,14 ist ein 2/2-Wegeventil geschaffen. Hierbei ist zu berücksichtigen, dass bei einem 2/2-Wegeventil nur eine der beiden Kanalöffnungen 34 in der Verschlussstellung abgedichtet werden muss, so dass die Ausgestaltung vereinfacht werden kann.

## Patentansprüche

1. Hochdruckventil, insbesondere für Brennstoffzellen, mit
einem Einlasskanal (10),
einem mit dem Einlasskanal (10) verbundenen Auslasskanal (12,14),
einem Stellglied (16) zum Öffnen/Schließen des Auslasskanals (12,14), wobei das Stellglied (16) einen öffenbaren/schließbaren Verbindungskanal (34,36) zur Verringerung der Druckdifferenz zwischen Einlasskanal (10) und Auslasskanal (12,14) vor dem Öffnen des Auslasskanals (12,14) aufweist
einem in dem Verbindungskanal (34, 36) angeordneten verschiebbaren Steuerelement (22) zum Öffnen / Schließen des Verbindungskanals (34, 36) und
einem mit dem Stellglied (16) verbundenen Antriebselement zum Betätigen des Stellglieds (16),
**dadurch gekennzeichnet, dass**
das Steuerelement (22) über einen Exzenter (28) und eine Welle (26) mit einem Antriebselement zum Verschieben des Steuerelementes (22) verbunden ist.

2. Hochdruckventil nach Anspruch 1, **dadurch gekennzeichnet, dass** das Steuerelement (22) und das Stellglied (16) mit dem selben Antriebselement verbunden sind, wobei das Betätigen des Stellglieds (16) mittels des Steuerelements (22) erfolgt.

3. Hochdruckventil nach Anspruch 2, **dadurch gekennzeichnet, dass** das Stellglied (16) über ein Mitnahmeelement (42,48) mit dem Steuerelement (22) verbunden ist.

4. Hochdruckventil nach Anspruch 3, **dadurch gekennzeichnet, dass** das Steuerelement (22) zwischen zwei als Mitnahmeelement dienenden Anschlagflächen (42,48) hin- und herbewegbar ist.

5. Hochdruckventil nach einem der Ansprüche 1 - 4, **dadurch gekennzeichnet, dass** der Verbindungskanal (34,36) zwei Kanalöffnungen (34) aufweist, die durch Verschieben des Steuerelements (22) öffenbar/schließbar sind.

6. Hochdruckventil nach Anspruch 5, **dadurch gekennzeichnet, dass** die Kanalöffnungen (34) jeweils in einer Anschlagfläche (42,48) vorgesehen sind.

7. Hochdruckventil nach einem der Ansprüche 1-6, **gekennzeichnet durch** zwei Auslasskanäle (12,14), die **durch** das eine Stellglied (16) öffenbar oder schließbar sind.

8. Hochdruckventil nach Anspruch 7, **dadurch gekennzeichnet, dass** das Stellglied (16) zum Öffnen/Schließen der beiden Auslasskanäle (12, 14) verschiebbar ist.

9. Hochdruckventil nach Anspruch 7 oder 8, **dadurch gekennzeichnet, dass** das Stellglied (16) zwei Dichtseiten (38) aufweist, die jeweils in Richtung eines der beiden Auslasskanäle (12,14) weisen.

10. Hochdruckventil nach Anspruch 9, **dadurch gekennzeichnet, dass** die beiden Kanalöffnungen (34) jeweils in einer Dichtseite (38) angeordnet sind.

11. Hochdruckventil nach einem der Ansprüche 1 - 10, **dadurch gekennzeichnet, dass** als Stellglied (16) ein verschiebbarer Stellkolben und/oder als Steuerelement (22) ein Steuerkolben vorgesehen ist.

12. Hochdruckventil nach einem der Ansprüche 1 - 11, **dadurch gekennzeichnet, dass** der das Stellglied (16) und das Steuerelement (22) koaxial zueinander angeordnet sind.

## Claims

1. A high-pressure valve, particularly for fuel cells, comprising
an intake channel (10),
an outlet channel (12,14) connected to the intake channel (10),
an actuator (16) for opening/closing the outlet channel (12,14), the actuator (16) comprising an openable/closable connection channel (34,36) for reducing the pressure difference between the intake channel (10) and the outlet channel (12,14) prior to opening the outlet channel (12,14),
a displaceable control element (22) arranged within the connection channel (34,36) for opening/closing the connection channel (34,36), and
a drive element connected to the actuator (16) for operating the actuator (16),
**characterized in that**
the control element (22) is connected via an eccentric (28) and a shaft (26) to a drive element for displacing the control element (22).

2. The high-pressure valve according to claim 1, **characterized in that** the control element (22) and the actuator (16) are connected to the same drive element, the actuating of the actuator (16) being performed by the control element (22).

3. The high-pressure valve according to claim 2, **characterized in that** the actuator (16) is connected to the control element (22) via entrainment means (42,48).

4. The high-pressure valve according to claim 3, **characterized in that** the control element (22) is arranged to be reciprocated between two abutment faces (42,48) serving as entrainment means.

5. The high-pressure valve according to any one of claims 1-4, **characterized in that** the connection channel (34,36) comprises two channel openings (34) adapted to be opened/closed by displacement of the control element (22).

6. The high-pressure valve according to claim 5, **characterized in that** the channel openings (34) are respectively provided in an abutment face (42,48).

7. The high-pressure valve according to any one of claims 1-6, **characterized by** two outlet channels (12,14) adapted to be opened or closed by the sole actuator (16).

8. The high-pressure valve according to claim 7, **characterized in that** the actuator (16) is displaceable for opening/closing the two outlet channels (12,14).

9. The high-pressure valve according to claim 7 or 8, **characterized in that** the actuator (16) comprises two sealing sides (38) arranged to face towards respectively one of the two outlet channels (12,14).

10. The high-pressure valve according to claim 9, **characterized in that** the two channel openings (34) are respectively arranged in one of the sealing sides (38).

11. The high-pressure valve according to any one of claims 1-10, **characterized in that** the actuator (16) is provided as a displaceable actuator piston and/or the control element (22) is provided as a control piston.

12. The high-pressure valve according to any one of claims 1-11, **characterized in that** the actuator (16) and the control element (22) are arranged coaxially with each other.

## Revendications

1. Soupape haute pression, en particulier pour piles à combustible, comprenant
un conduit d'admission (10),
un conduit d'échappement (12, 14) raccordé au conduit d'admission (10),
un organe de réglage (16) pour l'ouverture/la fermeture du conduit d'échappement (12, 14), l'organe de réglage (16) comportant un conduit de jonction (34, 36) pouvant être ouvert/fermé pour réduire la différence de pression entre le conduit d'admission (10) et le conduit d'échappement (12, 14) avant l'ouverture du conduit d'échappement (12, 14),
un élément de commande (22) mobile, disposé dans le conduit de jonction (34, 36), pour l'ouverture/la fermeture du conduit de jonction (34, 36) et
un élément d'entraînement, raccordé à l'organe de réglage (16), pour l'actionnement de l'organe de réglage (16),
**caractérisée en ce que**
l'élément de commande (22) est raccordé par l'intermédiaire d'un excentrique (28) et d'un arbre (26) avec un élément d'entraînement pour le déplacement de l'élément de commande (22).

2. Soupape haute pression suivant la revendication 1, **caractérisée en ce que** l'élément de commande (22) et l'organe de réglage (16) sont raccordés au même élément d'entraînement, l'actionnement de l'organe de réglage (16) s'effectuant au moyen de l'élément de commande (22).

3. Soupape haute pression suivant la revendication 2, **caractérisée en ce que** l'organe de réglage (16) est raccordé à l'élément de commande (22) par l'intermédiaire d'un entraîneur (42, 48).

4. Soupape haute pression suivant la revendication 3, **caractérisée en ce que** l'élément de commande (22) peut être animé d'un mouvement de va-et-vient entre deux surfaces de butée (42, 48) servant d'entraîneur.

5. Soupape haute pression suivant l'une des revendications 1 - 4, **caractérisée en ce que** le conduit de jonction (34, 36) comporte deux ouvertures de conduit (34) qui peuvent être ouvertes/fermées par déplacement de l'élément de commande (22).

6. Soupape haute pression suivant la revendication 5, **caractérisée en ce que** les ouvertures de conduit (34) sont prévues chacune dans une surface de butée (42, 48).

7. Soupape haute pression suivant l'une des revendications 1 - 6, **caractérisée par** deux conduits d'échappement (12, 14), qui peuvent être ouverts ou fermés par l'organe de réglage (16).

8. Soupape haute pression suivant la revendication 7, **caractérisée en ce que** l'organe de réglage (16) peut être déplacé pour l'ouverture/la fermeture des deux conduits d'échappement (12, 14).

9. Soupape haute pression suivant l'une des revendications 7 et 8, **caractérisée en ce que** l'organe de réglage (16) présente deux côtés d'étanchéité (38), dirigés chacun en direction de l'un des deux conduits d'échappement (12, 14).

10. Soupape haute pression suivant la revendication 9, **caractérisée en ce que** les deux ouvertures de conduit (34) sont disposées chacune dans un côté d'étanchéité (38).

11. Soupape haute pression suivant l'une des revendications 1 - 10, **caractérisée en ce qu'**un piston de réglage mobile est prévu en tant qu'organe de réglage (16) et/ou un piston de commande en tant qu'élément de commande (22).

12. Soupape haute pression suivant l'une des revendications 1 - 11, **caractérisée en ce que** l'organe de réglage (16) et l'élément de commande (22) sont disposés coaxialement l'un par rapport à l'autre.
